Europäisches Patentamt

European Patent Office

Office européen des brevets

(19)

(11) Veröffentlichungsnummer: **0 045 352**
**B1**

(12) **EUROPÄISCHE PATENTSCHRIFT**

(45) Veröffentlichungstag der Patentschrift:
11.07.84

(21) Anmeldenummer: 81103664.9

(22) Anmeldetag: 13.05.81

(51) Int. Cl.³: **F 02 F 5/00, F 16 J 9/26**

(54) Kolbenringe für Brennkraftmaschinen.

(30) Priorität: 02.08.80 DE 3029420

(43) Veröffentlichungstag der Anmeldung:
10.02.82 Patentblatt 82/6

(45) Bekanntmachung des Hinweises auf die Patenterteilung:
11.07.84 Patentblatt 84/28

(84) Benannte Vertragsstaaten:
CH FR GB IT LI

(56) Entgegenhaltungen:
AT - B - 287 404
DE - B - 1 152 720
DE - C - 734 599
DE - C - 814 683

SOVIET PHYSICS DOKLADY, Band 24, Nr. 7 Juli 1979, New York A.F. BELOV et al. "Hot Hydrostatic Pressing of Granules of Nickel-based Heat-resistant Alloys" Seiten 569 bis 571
AMERICAN CERAMIC SOCIETY BULLETIN Band 58, Nr. 4, April 1979, Columbus H.C. YEH et al. "Consolidation of Si3N4 by Hot Isostatic Pressing" Seiten 444 bis 447

(73) Patentinhaber: **M.A.N. MASCHINENFABRIK AUGSBURG-NÜRNBERG Aktiengesellschaft, Stadtbachstrasse 1, D-8900 Augsburg (DE)**

(72) Erfinder: **Mundorff, Frank, Leopold-Werndl-Strasse 22, A-4400 Steyr (AT)**

ACTORUM AG

## Beschreibung

Die vorliegende Erfindung betrifft Kolbenringe für Brennkraftmaschinen.

In der Beschreibungseinleitung der DE-PS 814 683 ist es als bekannt angegeben, Kolbenringe aus gesintertem pulverförmigen Leichtmetall herzustellen, das Zusätze an Schwermetallen hoher Schmelztemperaturen enthält. Dabei wurde von einem Aluminiumpulver ausgegangen, dem Magnesium, Beryllium, Lithium, Silicium, Kupfer, Nickel, Chrom, Kobalt, Titan, Mangan, Wolfram und andere Schwermetalle in Pulverform und feiner Korngrösse beigemischt waren. Weiter ist in der Beschreibungseinleitung dieser Patentschrift ausgeführt, dass das Gemisch alsdann unter hohem Pressdruck bei entsprechend hoher Formtemperatur zur Sinterung gebracht wurde.

Bei diesem hier zur Sinterung angewandten Verfahren handelt es sich, da zum Zeitpunkt des Anmeldetages der DE-PS 814 683 das heissisostatische Pressen noch nicht bekannt war, um ein herkömmliches Heisspressverfahren, bei dem das zu sinternde Pulver in hochdruck- und formstabilen Pressformen sowie voluminösen Presswerkzeugen mittels unter hoher Presskraft zugeführten Stempeln verdichtet und zur Sinterung gebracht wurde. Durch dieses herkömmliche Heisspressverfahren sind üblicherweise jedoch nur Sinterprodukte relativ geringer Dichte erzeugbar. Kolbenringe, die auf der Basis von Aluminiumpulver und eingelagerten Schwermetallen nach diesem herkömmlichen Heisspressverfahren hergestellt sind, weisen mithin eine relativ geringe Dichte, niedere Festigkeit und darüber hinaus auch eine relativ niedere Dehnfähigkeit auf. Auch wenn derart hergestellte Kolbenringe gute Gleiteigenschaften besitzen mögen, so wirkt sich deren relativ niedere Dehnfähigkeit insofern als nachteilig aus, dass diese bereits bei Überstreifen am Kolben brechen können. Ausserdem sind derartigen, auf der Basis von Aluminium hergestellten Kolbenringen von ihrer thermischen Belastbarkeit her gesehen, Grenzen gesetzt, die deren Anwendung in thermisch hoch belasteten Brennkraftmaschinen zumindest ohne spezielle Kühlmassnahmen nicht möglich erscheinen lassen. Entsprechendes gilt für deren Anwendbarkeit in mit stark schwefelhaltigem Schweröl betriebenen Brennkraftmaschinen, da auf der Basis von Aluminium hergestellte Kolbenringe relativ anfällig gegen die an verschiedenen Stellen in den Zylindern auftretende Schwefelsäure wären.

Es ist daher Aufgabe der Erfindung, Kolbenringe für Brennkraftmaschinen zu schaffen, die einfach herstellbar, thermisch hoch belastbar und korrosionsbeständig sind sowie eine hohe Verschleissfestigkeit auch bei Verwendung von Brennstoffen schlechter Qualität, insbesondere Schwerölen, ferner gute Notlaufeigenschaften bei Mangelschmierung gewährleisten und ausserdem eine hinreichend grosse Festigkeit sowie Dehnfähigkeit bei der Montage am Kolben und während dessen Betrieb besitzen.

Diese Aufgabe ist erfindungsgemäss dadurch gelöst, dass die Kolbenringe ausgehend von einer Mischung von Partikeln eines aus einer Legierung auf der Basis von Nickel bzw. Kobalt bestehenden Grundmetalls mit einem Anteil von 40-80 Gewichts-Prozent und eines Einlagerungsmaterials mit einem entsprechenden Gewichts-Restprozent-Anteil durch heissisostatisches Pressen dieser Mischung hergestellt sind. Eine Variante dieser Lösung und bevorzugte Einzelheiten sind in den Ansprüchen 2 bis 6 gekennzeichnet.

Hinsichtlich des erfindungsgemäss bei der Herstellung der Kolbenringe angewandten heissisostatischen Pressverfahrens sei darauf hingewiesen, dass zwar die Anwendung dieses Verfahrens allgemein zur Herstellung von Sinterprodukten, nicht jedoch zur Herstellung von Kolbenringen mit besonderen Eigenschaften und besonderer Zusammensetzung bekannt war.

Nachstehend sind einige Ausführungsformen der erfindungsgemässen Kolbenringe näher erläutert.

Bei einer ersten Ausführungsform eines Kolbenrings wird dieser ausgehend von einer Mischung aus Partikeln eines harten, verschleissfesten, thermisch hoch belastbaren Grundmetalls, nämlich einer Legierung auf der Basis von Nickel oder Kobalt, und eines weichen Einlagerungsmaterials, nämlich unveredeltem oder galvanisch vernickeltem Graphit hergestellt. Das Mischungsverhältnis ist dabei so gewählt, dass das Grundmetall 40-80 Gewichts-Prozent-Anteile und das Einlagerungsmaterial die entsprechenden Gewichts-Restprozent-Anteile, mithin 60-20 Gewichts-Prozent-Anteile besitzt.

Bei einer zweiten Ausführungsform sind die Kolbenringe ausgehend von einer Mischung aus Partikeln eines weichen Grundmetalls, nämlich Bronze, und eines harten, verschleissfesten, thermisch hoch belastbaren Einlagerungsmaterials, nämlich einer Legierung auf der Basis von Nickel oder Kobalt, hergestellt. Das Mischungsverhältnis ist dabei so gewählt, dass das Grundmetall 60-80 Gewichts-Prozent-Anteile und das Einlagerungsmaterial die entsprechenden Gewichts-Restprozent-Anteile, mithin 40-20 Gewichts-Prozent-Anteile besitzt.

Das harte Grundmetall gemäss der ersten Ausführungsform und das harte Einlagerungsmaterial gemäss der zweiten Ausführungsform besitzt im Falle der Kobalt-Basis-Legierung folgende Zusammensetzung angegeben in Gewichts-Prozent-Anteilen:

| Kobalt | 40-70 |
|---|---|
| Nickel | 0-20 |
| Chrom | 1-40 |
| Molybdän | 10-40 |
| Wolfram | 0-20 |
| Silicium | 1- 5 |
| Eisen | 0- 5 |

Alternativ hierzu besitzt das harte Grundmetall gemäss der ersten Ausführungsform und das harte Einlagerungsmaterial gemäss der zweiten Ausführungsform im Falle einer Nickel-Basis-Legierung folgende Zusammensetzung, angegeben in Gewichts-Prozent-Anteilen:

| | |
|---|---|
| Nickel | 40-70 |
| Kobalt | 0-30 |
| Chrom | 1-40 |
| Molybdän | 10-40 |
| Wolfram | 0-20 |
| Silicium | 1- 5 |
| Eisen | 0- 5 |

Bezüglich der vorstehend genannten Kobalt- bzw. Nickel-Basis-Legierung, die das harte Grundmetall gemäss der ersten Ausführungsform bzw. das Einlagerungsmaterial gemäss der zweiten Ausführungsform bildet, sei darauf hingewiesen, dass diese Werkstoffe in Brennkraftmaschinen bisher beispielsweise zur Panzerung der Ventilsitze von Gaswechselventilen verwendet wurden.

Bei der zweiten Ausführungsform besteht das weiche Einlagerungsmaterial — wie bereits erwähnt—aus unveredeltem Graphit. Alternativ hierzu kann auch galvanisch vernickelter Graphit mit 10-40 Gewichts-Prozent-Anteilen Graphit und entsprechenden Gewichts-Restprozent-Anteilen Nickel verwendet werden.

Die bei der ersten Ausführungsform das weiche Grundmetall bildende Bronze kann beispielsweise aus folgenden Legierungsbestandteilen, angegeben in Gewichts-Prozent bestehen:

| | |
|---|---|
| Kupfer | 80 |
| Zinn | 10 |
| Blei | 10 |

Bei der Herstellung der Kolbenringe werden zunächst das Grundmetall und Einlagerungsmaterial, welches jeweils bereits in Pulverform mit der erforderlichen Korngrösse der einzelnen Partikel vorliegt, gemischt und anschliessend diese Pulvermischung in einen vorbereiteten Aufnahmebehälter eingebracht. Dieser Aufnahmebehälter wird nach Einfülllen der Pulvermischung geschlossen. In diesem Zusammenhang sei darauf hingewiesen, dass es ein Charakteristikum des isostatischen Heiss-Press-Verfahrens ist, dass der Aufnahmebehälter im Gegensatz zur Pressform bei einem herkömmlichen Heiss-Press-Verfahren in der Regel aus relativ dünnen, deformierbaren Wandteilen besteht. Der geschlossene, hier die Pressform bildende Aufnahmebehälter wird dann in einen sogenannten Autoklaven eingebracht, in dem unter Anwendung des isostatischen Heiss-Press-Verfahrens bei materialspezifischer Wärmebeaufschlagung und gleichmässiger, allseitiger Druckbeaufschlagung unter Deformierung des Aufnahmebehälters die darin befindliche Pulvermischung verdichtet sowie zur Sinterung gebracht wird.

Derart hergestellte Kolbenringe sind wegen der erfindungsgemässen Paarung weicher und harter Werkstoffe der angegebenen Art thermisch relativ hoch belastbar sowie hoch verschleissfest, ausserdem korrosionsbeständig, insbesondere auch gegen die bei mit stark schwefelhaltigem Schweröl betriebenen Brennkraftmaschinen an verschiedenen Stellen in den Zylindern auftretende Schwefelsäure. Ein weiterer Vorteil ist in den guten Notlaufeigenschaften der erfindungsgemässen Kolbenringe bei Mangelschmierung begründet. Schliesslich besitzen diese Kolbenringe eine grosse Festigkeit bei trotzdem guter Dehnfähigkeit, was wiederum eine problemlose Montage am Kolben und ein einwandfreies Arbeiten im Betrieb gewährleistet.

## Patentansprüche

1. Kolbenringe für Brennkraftmaschinen, die aus einem pulverförmigen Grundmetall, dem pulverförmiges metallisches und/oder nicht metallisches Einlagerungsmaterial beigemischt wird, und durch Sinterung dieser Pulvermischung unter hohem Druck sowie entsprechend hoher Temperatur hergestellt sind,
dadurch gekennzeichnet,
dass die Kolbenringe aus
a) einem harten, verschleissfesten, thermisch hoch belastbaren Grundmetall mit 40 bis 80 Gewichts-Prozent-Anteil, nämlich einer Legierung auf Nickel- oder Kobalt-Basis
und
b) einem weichen Einlagerungsmaterial aus unveredeltem oder galvanisch vernickeltem Graphit, mit einem entsprechenden Rest Gewichts-Prozent-Anteil,
bestehen, und dass die Kolbenringe durch isostatisches Heisspressen dieser Pulvermischung hergestellt sind.

2. Kolbenringe für Brennkraftmaschinen, die aus einem pulverfömigen Grundmetall, dem pulverförmiges metallisches Einlagerungsmaterial beigemischt wird, und durch Sinterung dieser Pulvermischung unter hohem Druck sowie entsprechend hoher Temperatur hergestellt sind,
dadurch gekennzeichnet,
dass die Kolbenringe aus
a) einem weichen Grundmetall mit 60 bis 80 Gewichts-Prozent-Anteil, nämlich Bronze,
und
b) einem harten, verschleissfesten, thermisch hoch belastbaren Einlagerungsmaterial, nämlich einer Legierung auf Nickel- oder Kobalt-Basis, mit einem entsprechenden Rest Gewichts-Prozent-Anteil,
bestehen, und dass die Kolbenringe durch isostatisches Heisspressen dieser Pulvermischung hergestellt sind.

3. Kolbenringe nach einem der Ansprüche 1 oder 2,
dadurch gekennzeichnet,
dass die das harte Grundmetall bzw. das harte Einlagerungsmaterial bildende Kobalt-Basis-Legierung folgende Zusammensetzung, angegeben in Gewichts-Prozent-Anteilen, aufweist:

| | |
|---|---|
| Kobalt | 40-70 |
| Nickel | 0-20 |
| Chrom | 1-40 |
| Molybdän | 10-40 |
| Wolfram | 0-20 |
| Silicium | 1- 5 |
| Eisen | 0- 5 |

4. Kolbenringe nach einem der Ansprüche 1 oder 2,
dadurch gekennzeichnet,
dass die das harte Grundmetall bzw. das harte Einlagerungsmaterial bildende Nickel-Basis-Legierung folgende Zusammensetzung, angegeben in Gewichts-Prozent-Anteilen, aufweist:

| | |
|---|---|
| Nickel | 40-70 |
| Kobalt | 0-30 |
| Chrom | 1-40 |
| Molybdän | 10-40 |
| Wolfram | 0-20 |
| Silicium | 1- 5 |
| Eisen | 0- 5 |

5. Kolbenringe nach Anspruch 1,
dadurch gekennzeichnet,
dass das weiche Einlagerungsmaterial aus galvanisch vernickeltem Graphit mit 10-40 Gewichts-Prozent-Anteilen Graphit und entsprechenden Gewichts-Restprozent-Anteilen Nickel besteht.

6. Kolbenringe nach Anspruch 2,
dadurch gekennzeichnet,
dass die das weiche Grundmetall bildende Bronze aus folgenden Legierungsbestandteilen, angegeben in Gewichts-Prozent, besteht:

| | |
|---|---|
| Kupfer | 80 |
| Zinn | 10 |
| Blei | 10 |

## Claims

1. Piston rings for combustion engines, which are made from a powder-form base metal, with which powder-form metallic and/or non-metallic interstitial material is mixed, and by sintering this powder mixture at high pressure and a correspondingly high temperature, characterised in that the piston rings consist of:
(a) a hard, wear-resistant base metal, which is thermally loadable to a high degree, in 40 to 80% by weight, namely an alloy based on nickel or cobalt, and
(b) a soft interstitial material of non-refined or galvanically nickel-plated graphite, with a corresponding remaining number of percent by weight,
and in that the piston rings are made by isostatic hot-pressing of this powder mixture.

2. Piston rings for combustion engines, which are made from a powder-form base metal, with which powder-form metal interstitial material is mixed, and by sintering this powder mixture at high pressure and a correspondingly high temperature, characterised in that the piston rings consist of:
(a) a soft base metal in 60 to 80% by weight, namely bronze, and
(b) a hard, wear-resistant interstitial material which is thermally loadable to a high degree, namely an alloy based on nickel or cobalt, in a corresponding remaining number of percent by weight,

and in that the piston rings are made by isostatic hot-pressing of this powder mixture.

3. Piston rings according to one of Claims 1 or 2, characterised in that the cobalt base alloy, forming the hard base metal or respectively the hard interstitial material, has the following composition, given in percent by weight:

| | |
|---|---|
| Cobalt | 40-70 |
| Nickel | 0-20 |
| Chromium | 1-40 |
| Molybdenum | 10-40 |
| Tungsten | 0-20 |
| Silicon | 1- 5 |
| Iron | 0- 5 |

4. Piston rings according to one of Claims 1 or 2, characterised in that the nickel base alloy forming the hard base metal or respectively the hard interstitial material has the following composition, given in percent by weight:

| | |
|---|---|
| Nickel | 40-70 |
| Cobalt | 0-30 |
| Chromium | 1-40 |
| Molybdenum | 10-40 |
| Tungsten | 0-20 |
| Silicon | 1- 5 |
| Iron | 0- 5 |

5. Piston rings according to Claim 1, characterised in that the soft interstitial material consists of galvanically nickel-plated graphite with 10 to 40% by weight of graphite, and a corresponding number of percent by weight of nickel.

6. Piston rings according to Claim 2, characterised in that the bronze forming the soft base metal consist of the following alloy components, given in percent by weight:

| | |
|---|---|
| Copper | 80 |
| Tin | 10 |
| Lead | 10 |

## Revendications

1. Segments de piston pour moteurs à combustion interne, qui sont fabriqués à partir d'un métal de base sous forme de poudre, auquel une matière d'addition pulvérulente métallique et/ou non métallique est mélangée, et par frittage de ce mélange de poudres, sous une pression élevée et à une température élevée correspondante, caractérisés en ce que les segments de piston se composent de:
a) un métal de base dur, résistant à l'usure, pouvant être thermiquement fortement sollicité et intervenant avec un pourcentage compris entre 40 et 80% en poids, notamment un alliage à base de nickel ou de cobalt, et
b) une matière d'addition douce en graphite non conditionné ou nickelé galvaniquement, intervenant avec un pourcentage résiduel en poids correspondant,
et en ce que les segments de piston sont fabriqués par compression isostatique à chaud de ce mélange de poudres.

2. Segments de piston pour moteurs à combustion interne, qui sont fabriqués à partir d'un métal de base sous forme de poudre, auquel est mélangée une matière d'addition métallique sous forme de poudre, et par frittage de ce mélange de poudres sous une pression élevée et à une température élevée correspondante, caractérisés en ce que les segments de piston se composent de:

a) un métal de base doux intervenant dans une proportion de 60 à 80% en poids, notamment du bronze, et

b) une matière d'addition dure, résistante à l'usure, pouvant être thermiquement fortement sollicitée, notamment un alliage à base de nickel ou de cobalt, intervenant avec une proportion correspondant au pourcentage en poids résiduel,

et en ce que les segments de piston sont fabriqués par compression isostatique à chaud de ce mélange de poudres.

3. Segments de piston selon l'une des revendications 1 ou 2, caractérisés en ce que l'alliage à base de cobalt constituant le métal de base dur ou la matière d'addition dure a la composition suivante, donnée en pour-cent en poids:

| | |
|---|---|
| Cobalt | 40-70 |
| Nickel | 0-20 |
| Chrome | 1-40 |
| Molybdène | 10-40 |

| | |
|---|---|
| Tungstène | 0-20 |
| Silicium | 1- 5 |
| Fer | 0- 5 |

4. Segments de piston selon l'une des revendications 1 ou 2, caractérisés en ce que l'alliage à base de nickel constituant le métal de base dur ou la matière d'addition dure a la composition suivante, donnée en pour-cent en poids:

| | |
|---|---|
| Nickel | 40-70 |
| Cobalt | 0-30 |
| Chrome | 1-40 |
| Molybdène | 10-40 |
| Tungstène | 0-20 |
| Silicium | 1- 5 |
| Fer | 0- 5 |

5. Segments de piston selon la revendication 1, caractérisés en ce que la matière de base douce se compose de graphite nickelé galvaniquement, contenant de 10 à 40% en poids de graphite et un pourcentage résiduel en poids correspondant de nickel.

6. Segments de piston selon la revendication 2, caractérisés en ce que le bronze constituant le métal de base doux est formé des constituants d'alliage suivants, donnés en pour-cent en poids:

| | |
|---|---|
| Cuivre | 80 |
| Etain | 10 |
| Plomb | 10 |